# EUROPÄISCHE PATENTSCHRIFT

(11) **EP 1 393 477 B1**
(45) Veröffentlichungstag und Bekanntmachung des Hinweises auf die Patenterteilung: **04.08.2004**
(21) Anmeldenummer: 02771563.0
(22) Anmeldetag: 16.04.2002
(51) Int. Cl.: H04B 17/00

(54) **SIGNALGENERATOR MIT FREQUENZVERSATZEINHEIT IM BASISBAND**
SIGNAL GENERATOR WITH FREQUENCY OFFSET UNIT IN THE BASE BAND
GENERATEUR DE SIGNAL COMPORTANT UNE UNITE DE DECALAGE DE FREQUENCE DANS LA BANDE DE BASE

(30) Priorität: 18.05.2001 DE 10124372
(43) Veröffentlichungstag der Anmeldung: 03.03.2004
(73) Patentinhaber: Rohde & Schwarz GmbH & Co. KG, 81671 München (DE)
(72) Erfinder: KERNCHEN, Wolfgang, 82054 Sauerlach (DE); HECHT, Andreas, 82223 Eichenau (DE); KUFER, Wolfgang, 84453 Mühldorf (DE)
(74) Vertreter: Körfer, Thomas, Dipl.-Phys.
(86) Internationale Anmeldenummer: PCT/EP2002/004213
(87) Internationale Veröffentlichungsnummer: WO 2002/095993

(56) Entgegenhaltungen:
- EP-A- 0 437 362
- US-A- 5 539 772
- US-A- 6 100 771

## Beschreibung

Die Erfindung betrifft einen Signalgenerator, bei welchem mittels einer Basisbandeinheit zunächst ein digitales Basisbandsignal erzeugt wird und dieses, gegebenenfalls nach Zwischenschaltung von Einheiten, mit welchen ein Übertragungskanal z. B. mit einem Fading einer Verzerrung und einem Rauschen simuliert werden kann, einem I/Q-Modulator zugeführt wird.

In der Mobilfunktechnik werden aus Kostenersparnisgründen zunehmend breitbandige Verstärker eingesetzt, über die gleichzeitig mehrere Mobilfunksignale verstärkt werden können. Beispielsweise werden zwei oder mehrere auf unterschiedlichen Frequenzbändern befindliche W-CDMA (Wideband - Code Division Multiple Access)-Signale oder ein GSM-Signal und ein W-CDMA-Signal gleichzeitig benötigt. Zum Testen beispielsweise eines Leistungsverstärkers einer Basisstation muß dieser Leistungsverstärker mit einem der Betriebssituation nachgebildeten, praxisgerechten Meßsignal beaufschlagt werden, d. h. mit einem Summensignal aus den beiden vorstehend genannten Einzelsignalen. Dazu wurden bislang die Einzelsignale in separaten Signalgeneratoren als separate Hochfrequenz-Signale erzeugt und am Ausgang der Signalgeneratoren, d. h. hochfrequenzseitig, zusammengefaßt. Dabei besteht das Problem der Synchronisation der beiden separaten Signalgeneratoren. Außerdem ist nachteilig, daß mehrere Signalgeneratoren benötigt werden, die separate Bedienung mehrerer Geräte umständlich ist und die Geräte ausgangsseitig umständlich miteinander verkabelt werden müssen.

Zum Stand der Technik sei beispielsweise auf die US 5,465,050 verwiesen, bei welcher hochfrequenzseitig über ein Widerstandsnetzwerk das Ausgangssignal eines Signalgenerators mit dem Ausgangssignal eines Rauschgenerators kombiniert wird.

Der Erfindung liegt deshalb die Aufgabe zugrunde, einen Signalgenerator zu schaffen, mit welchem in einfacher Weise in unterschiedlichen Frequenzbändern positionierte, digital gleich oder unterschiedlich modulierte Signale erzeugt werden können.

Die Aufgabe wird durch die Merkmale des Anspruchs 1 gelöst.

Erfindungsgemäß sind zumindest zwei Basisbandeinheiten vorgesehen, wobei die Ausgangssignale der Basisbandeinheiten bereits im Basisband zueinander frequenzversetzt werden und die in ihrer Frequenzlage versetzten Basisbandsignale addiert werden. Beispielsweise können zwei W-CDMA-Signale erzeugt werden, die in ihrer Frequenzlage um einige MHz zueinander versetzt sind.

Der Vorteil dieser Vorgehensweise liegt darin, daß das Summensignal mit einem einzigen Signalgenerator erzeugt werden kann und nicht mehrere Signalgeneratoren hochfrequenzseitig miteinander verschaltet werden müssen. Dadurch wird eine einfache Handhabung erreicht.

Die Unteransprüche betreffen vorteilhafte Weiterbildungen der Erfindung.

Die Basisbandeinheiten können durch eine gemeinsame Steuereinheit, d. h. durch einen gemeinsamen Mikroprozessor, einen gemeinsamen digitalen Signalprozessor oder einen gemeinsamen Synthesizer synchron angesteuert werden. Ein Synchronisierungsproblem wie bei der Verwendung zweier separater Signalgeneratoren besteht somit nicht. Gegebenenfalls kann für die Basisbandeinheiten weitgehend die gleiche Einstellung übernommen werden und der Benutzer muß für die beiden Basisbandeinheiten die entsprechenden Parameter nur einmal an dem Gerät einstellen.

Es kann ein Basisbandgenerator vorgesehen sein, dem externe Signale zuführbar sind (analog oder digital, z. B. I/Q-Daten oder ein Zwischenfrequenzsignal). Auch das digitale Basisbandsignal, das aus diesem extern zugeführten Signal erzeugt wird, kann in der Frequenz versetzt werden.

Auch können Einheiten, die bestimmte Kanaleigenschaften simulieren, z. B. Fadingeinheiten, Rauscheinheiten oder Verzerrungseinheiten zwischen den Basisbandeinheiten und den I/Q-Modulatoren vorgesehen sein, wobei es alternativ möglich ist, die Basisbandsignale erst nach den Fadingeinheiten und/oder Rauscheinheiten zu dem Summensignal zu addieren.

Ein Ausführungsbeispiel der Erfindung wird nachfolgend unter Bezugnahme auf die Zeichnung näher beschrieben. In der Zeichnung zeigt:

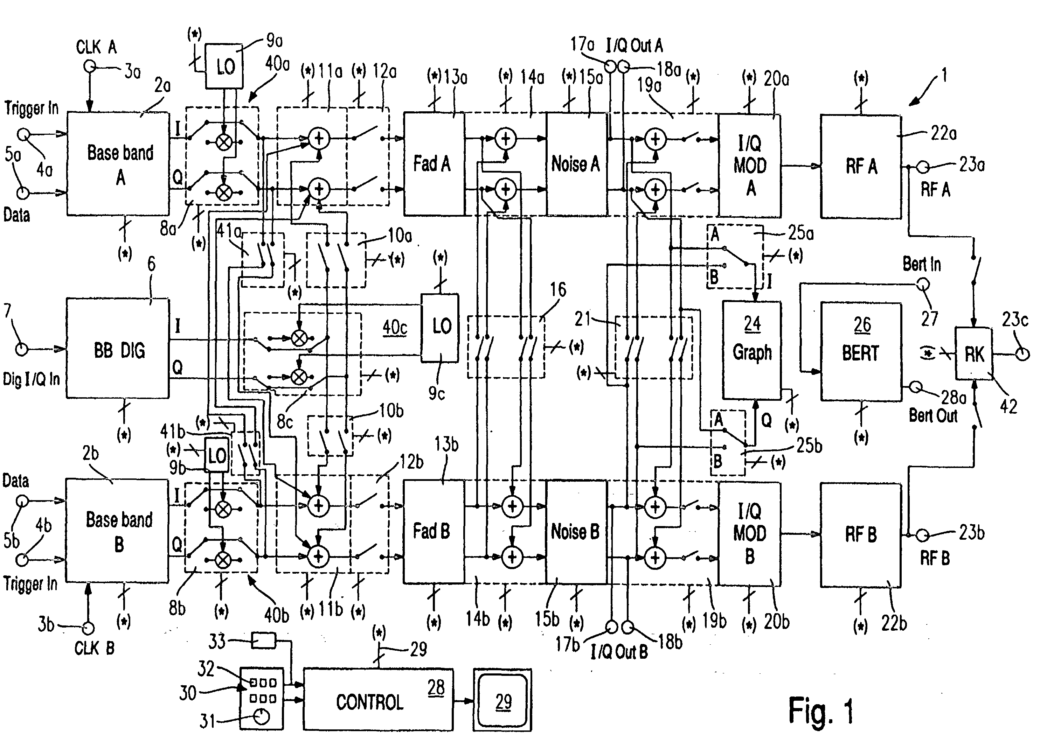

- Fig. 1: ein Blockschaltbild eines Ausführungsbeispiels eines erfindungsgemäßen Signalgenerators.

Der Signalgenerator 1 umfaßt eine erste Basisbandeinheit 2a und eine zweite Basisbandeinheit 2b. Die Basisbandeinheiten 2a und 2b erzeugen an ihren I- und Q-Ausgängen Basisbandsignale nach vorgegebenen, durch den Benutzer auswählbaren Standards, beispielsweise nach dem GSM-Standard, dem GSM-EDGE-Standard oder einem Weitband-CDMA-Standard. Den Basisbandeinheiten 2a, 2b sind an Buchsen 3a bzw. 3b Clock-Signale, an Buchsen 4a bzw. 4b Trigger-Signale und an Buchsen 5a bzw. 5b Modulationsdaten zuführbar. Daneben ist im dargestellten Ausführungsbeispiel ein digitaler Basisbandgenerator 6 vorhanden, der aus an einer Buchse 7 zugeführten digitalen I/Q-Werten die I- und Q-Komponente eines weiteren Basisband-Signals erzeugt. Das Ausgangssignal des digitalen Basisbandgenerators 6 kann über eine Multipliziereinheit 8c, welcher die einstellbare Frequenz eines einstellbaren lokalen Oszillators 9c zugeführt wird, frequenzversetzt werden. Die Multipliziereinheit 8c und der lokale Oscillator 9c bilden somit eine Frequenzversatzeinheit 40c.

Über eine. erste Schalteinheit 10a bzw. eine zweite Schalteinheit 10b wird das ggf. frequenzversetzte Basisbandsignal der digitalen Basisbandgeneratoreinheit 6 einer digitalen Addiereinheit 11a oder einer digitalen Addiereinheit 11b zugeführt.

Das Ausgangssignal der Basisbandeinheit 2a wird einer Multipliziereinheit 8a bestehend jeweils aus einem Multiplizierer für die I-Komponente und für die Q-Komponente zugeführt. Der Multipliziereinheit 8a wird die einstellbare Frequenz eines einstellbaren lokalen Oszillators 9a zugeführt. Somit kann das digitale Ausgangssignal der Basisbandeinheit 2a bei Bedarf frequenzversetzt werden. Sofern kein Frequenzversatz gewünscht wird, sind die Multiplizierer der Multipliziereinheit 8a durch schaltbare Umwegleitungen überbrückbar. Das Ausgangssignal der Multipliziereinheit 8a wird der Addiereinheit 11a zugeführt.

In gleicher Weise wird das Ausgangssignal der Basisbandeinheit 8b einer Multipliziereinheit 8b, bestehend jeweils aus einem Multiplizierer für die I-Komponente und die Q-Komponente, zugeführt. Die Multiplizierer der Multipliziereinheit 8b sind mit dem einstellbaren lokalen Oszillator 8b verbunden, so daß bei Bedarf die Frequenz des digitalen Ausgangssignals der Basisbandeinheit 2b frequenzversetzt werden kann. Sofern kein Frequenzversatz erfolgen soll, sind auch die Multiplizierer dieser Multipliziereinheit 8b durch schaltbare Umwegleitungen überbrückbar. Das Ausgangssignal der Multipliziereinheit 8b wird der Addiereinheit 11b zugeführt.

Über eine Schalteinheit 41a ist auch der Ausgang der Multipliziereinheit 40a mit der Addiereinheit 11b verbindbar, während über eine Schalteinheit 41b der Ausgang der Multipliziereinheit 8b mit der Addiereinheit 11a verbindbar ist.

Somit können die Ausgangssignale der Basisbandeinheit 2a, der Basisbandeinheit 2b und des Basisbandgenerators 6 unabhängig voneinander in der Frequenz versetzt werden und entweder an der Addiereinheit 11a oder der Addiereinheit 11b frequenzversetzt addiert werden.

Über eine Schalteinheit 12a bzw. eine Schalteinheit 12b wird das Ausgangssignal der Addiereinheiten 11a und 11b einer Fadingeinheit 13a bzw. 13b zugeführt, die das Basisbandsignal mit einem Fading (variablem Schwund) und/oder einer Verzerrung beaufschlagt. Die Funktionen der Fadingeinheiten 13a und 13b, beispielsweise die Anzahl, die Zeitverzögerung und die Dämpfung der in der Fadingeinheit implementierten Signalverzögerungspfade, können durch den Benutzer festgelegt werden. Die Fadingeinheiten 13a und 13b sind über jeweils eine Addiereinheit 14a bzw. 14b mit jeweils einer Rauscheinheit 15a bzw. 15b verbunden. Die Rauscheinheiten 15a, 15b beaufschlagen das Basisbandsignal mit einem durch den Benutzer festlegbaren Rauschsignal, wobei beispielsweise die Rauschart und der Pegel des von der Rauscheinheit 15a, 15b erzeugten Rauschsignals durch den Benutzer auswählbar ist.

Über eine die Addiereinheiten 14a und 14b verbindende Schalteinheit 16 können anstatt einer separaten Verbindung der jeweiligen Fadingeinheit 13a bzw. 13b mit der zugeordneten Rauscheinheit 15a bzw. 15b die Ausgangssignale der Fadingeinheiten 13a, 13b auch addiert und jeweils einer der beiden Rauscheinheiten 15a bzw. 15b zugeführt werden. Die I/Q-Ausgangssignale am Ausgang der Rauscheinheiten 15a bzw. 15b sind an Buchsen 17a und 18a bzw. 17b und 18b auskoppelbar.

Die Ausgangssignale der Rauscheinheiten 17a und 17b sind über Addier- und Schalteinheiten 19a und 19b I/Q-Modulatoren 20a bzw. 20b zuführbar. Auch hier besteht über eine Schalteinheit 21 die Möglichkeit, die Ausgangssignale der Rauscheinheiten 15a und 15b zu addieren und einem der beiden I/Q-Modulatoren 20a bzw. 20b zuzuführen. Auch hinsichtlich der Funktion des I/Q-Modulators 20a, 20b bestehen mehrere benutzerspezifische Auswahlmöglichkeiten. Beispielsweise kann der I/Q-Modulator 20a, 20b so betrieben werden, daß dieser eine Burst-Sequenz erzeugt und die aktiven Bursts bzw. die Pegel der aktiven Bursts durch die Benutzer ausgewählt werden können.

Die I/Q-Modulatoren 20a und 20b sind jeweils mit einer Hochfrequenzeinheit 22a bzw. 22b verbunden und das Hochfrequenzsignal kann an einer Buchse 23a bzw. 23b abgenommen werden. Beispielsweise können die Ausgangsfrequenz oder mehrere im Frequenzsprungverfahren angesprungene Ausgangsfrequenzen der Hochfrequenzeinheit 22a und 22b durch den Benutzer ausgewählt werden.

Zusätzlich ist eine Signalanzeige 24 vorhanden, die über Schalteinheiten 25a bzw. 25b im Ausführungsbeispiel mit dem Ausgang der Rauscheinheit 15a oder der Rauscheinheit 15b verbindbar ist. Alternativ ist es auch denkbar, daß die Anzeigeeinrichtung 24 direkt mit den Ausgängen der Basisbandeinheiten 2a und 2b verbindbar ist. Die Signalanzeige 24 ermöglicht beispielsweise die Darstellung des Konstellationsdiagramms, so daß der Benutzer die Wirkungsweise des geschalteten Signalpfads überprüfen kann.

Ferner ist ein Bitfehlerratentester (BERT = Bit Error Rate Tester) 26 vorgesehen, dessen Eingangsbuchse 27 ein Signal des Prüflings (DUT) zuführbar ist, wobei an der Ausgangsbuchse 28 die Bitfehlerrate des Signals abgenommen werden kann.

Es können auch noch weitere Funktionseinheiten vorhanden sein und es können weitere Kombinationsvarianten der Funktionseinheiten möglich sein, die aufgrund der Übersichtlichkeit nicht dargestellt sind.

Die Ausgänge 23a und 23b der Hochfrequenzeinheiten 22a und 22b können optional über eine Kombinationseinheit 42, beispielsweise einem Richtkoppler oder ein Widerstandsnetzwerk, zusätzlich noch kombinierbar sein, um bei Bedarf die beiden Signalpfade auch hochfrequenzseitig zu einem Summensignal addieren zu können. Somit werden die beiden frequenzversetzten Basisbandsignale wahlweise jeweils auf zwei separaten Hochfrequenz-Pfaden moduliert und erst die beiden analogen Hochfrequenz-Signale werden addiert. Bei der Addition im Basisband ist die erreichbare Dynamik des Signals durch den Analog-Digital-Wandler begrenzt ist. Dieser Nachteil entfällt bei der Addition im analogen Bereich. Dafür ist jedoch ein höherer Aufwand erforderlich. Die beiden Hochfrequenz-Pfade arbeiten dabei mit der gleichen Trägerfrequenz. Dies hat gegenüber der Lösung, beide Hochfrequenz-Pfade mit unterschiedlicher Trägerfrequenz zu betreiben und dafür auf den Frequenzoffset im Basisband zu verzichten, den Vorteil, daß nur eine Frequenzerzeugungseinheit, beispielsweise nur ein Synthesizer, für die Erzeugung der Trägerfrequezn notwendig ist, was zu einer Aufwandsersparnis führt.

Alle vorstehend beschriebenen Funktionseinheiten 2a, 2b, 6, 8a, 8b, 8c, 9a, 9b, 9c, 10a, 10b, 11a, 11b, 12a, 12b, 13a, 13b, 14a, 14b, 15a, 15b, 16, 19a, 19b, 20a, 20b, 21, 22a, 22b, 24, 26, 40a, 40b, 41a, 41b, 42 sind mit einer Steuereinrichtung 28, beispielsweise einer CPU, über einen Steuerbus 29, dessen Verbindung mit den Funktionseinheiten über das Symbol (*) gekennzeichnet ist, verbunden. Die Steuereinheit 28 steuert die vom Benutzer gewünschte Verschaltung und Funktion der einzelnen Funktionseinheiten. Die aktuelle Verschaltung der Funktionseinheiten kann auf einer Darstellungseinrichtung (einem Display) 29, das sich zusammen mit den Bedienelementen 30 an der Frontseite des Signalgenerators 1 befinden kann, dargestellt werden. Dazu ist jeder Funktionseinheit ein graphischer Funktionsblock zugeordnet und die Verbindung der Funktionseinheiten wird durch entsprechende Verbindungselemente, die die Funktionsblöcke miteinander verbinden, auf der Darstellungseinrichtung 29 dargestellt. Die Auswahl der Verbindungen der Funktionsblöcke und die Auswahl der Funktionen der Funktionsblöcke erfolgt entweder mittels eines Drehknopfs 31 und/oder entsprechenden Bedienknöpfen 32 oder über ein verfahrbares Positionierungselement 33 (Maus).

## Patentansprüche

1. Signalgenerator (1) mit
zumindest einer ersten Basisbandeinheit (2a) und einer zweiten Basisbandeinheit (2b), die ein digitales Basisbandsignal erzeugen,
zumindest einer ersten Frequenzversatzeinheit (40a), die mit der ersten Basisbandeinheit (2a) verbunden ist und die Frequenz des Ausgangssignals dieser Basisbandeinheit (2a) um einen Frequenzversatz versetzt,
zumindest einer ersten Addiereinheit (11a), die das Ausgangssignal der zweiten Basisbandeinheit (2b) und das Ausgangssignal der ersten Frequenzversatzeinheit (40a) addiert, und
einem der ersten Addiereinheit (11a) nachgeschalteten ersten I/Q-Modulator (20a).

2. Signalgenerator nach Anspruch 1,
**gekennzeichnet durch**,
eine zweite Frequenzversatzeinheit (40b), die mit der zweiten Basisbandeinheit (2a) verbunden ist und die Frequenz des Ausgangssignals der zweiten Basisbandeinheit (2a) um einen Frequenzversatz versetzt,
eine zweite Addiereinheit (11b), die das Ausgangssignal der ersten Basisbandeinheit (2b) und das Ausgangssignal der zweiten Frequenzversatzeinheit (40b) addiert, und
einen der zweiten Addiereinheit (11b) nachgeschalteten zweiten I/Q-Modulator (20b).

3. Signalgenerator nach Anspruch 1 oder 2,
**dadurch gekennzeichnet,**
**daß** die Basisbandeinheiten (2a,2b) durch eine gemeinsame Steuereinheit (28) synchron angesteuert werden.

4. Signalgenerator nach einem der Ansprüche 1 bis 3,
**gekennzeichnet durch**,
einen Basisbandgenerator (6), welchem ein analoges oder digitales externes Signal zuführbar ist und welcher daraus eine digitales Basisbandsignal erzeugt, und
eine weitere Frequenzversatzeinheit (40c), die mit dem Basisbandgenerator (6) verbunden ist und die Frequenz dessen Ausgangssignals um einen Frequenzversatz versetzt, wobei das Ausgangssignal dieser Frequenzversatzeinheit (40c) der ersten und/oder zweiten Addiereinheit (11a, 11b) zuführbar ist.

5. Signalgenerator nach Anspruch 2,
**dadurch gekennzeichnet,**
**daß** den I/Q-Modulatoren (20a,20b) jeweils separate Hochfrequenzeinheiten (22a,22b) nachgeschaltet sind und die Ausgangssignale der Hochfrequenzeinheiten (22a,22b) in einer Kombinationseinheit (42) kombinierbar sind.

6. Signalgenerator nach einem der Ansprüche 1 bis 5,
**dadurch gekennzeichnet,**
**daß** jeder Basisbandeinheit (2a,2b) eine Fadingeinheit (13a,13b) nachgeschaltet ist, die das Basisbandsignal mit einem Fading und/oder einer Verzerrung beaufschlagt, und den Fadingeinheiten (13a,13b) zumindest eine weitere Addiereinheit (14a;14b) nachgeschaltet ist, mit welcher die Ausgangssignale der Fadingeinheiten (13a,13b) addierbar sind.

7. Signalgenerator nach einem der Ansprüche 1 bis 6,
**dadurch gekennzeichnet,**
**daß** jeder Basisbandeinheit (2a, 2b) eine Rauscheinheit (15a,15b) nachgeschaltet ist, die das Basisbandsignal mit Rauschen beaufschlagt, und den Rauscheinheiten (15a,15b) zumindest eine weitere Addiereinheit (19a;19b) nachgeschaltet ist, mit welcher die Ausgangssignale der Rauscheinheiten (15a,15b) addierbar sind.

## Claims

1. Signal generator (1) with at least one first base band unit (2a) and a second base band unit (2b), which generate a digital base band signal,
with at least one first frequency offset unit (40a), which is connected to the first base band unit (2a) and offsets the frequency of the output signal from this base band unit (2a) by a frequency offset,
with at least one first addition unit (11a), which adds the output signal from the second base band unit (2b) and the output signal from the first frequency offset unit (40a), and
with an I/Q-modulator (20a) connected in series to the first addition unit (11a).

2. Signal generator according to claim 1,
**characterised by**
a second frequency offset unit (40b), which is connected to the second base band unit (2a) and offsets the frequency of the output signal from the second base band unit (2a) by a frequency offset, by a second addition unit (11b), which adds the output signal from the first base band unit (2b) and the output signal from the second frequency offset unit (40b), and
by a second I/Q-modulator (20b) connected in series to the second addition unit (11b).

3. Signal generator according to claim 1 or 2,
**characterised in that**
the base band units (2a, 2b) are controlled in a synchronous manner by a common control unit (28).

4. Signal generator according to any one of claims 1 to 3,
**characterised by**
a base band generator (6), to which an analogue or digital external signal can be supplied, and which generates a digital base band signal from this, and by a further frequency offset unit (40c), which is connected to the base band generator (6) and
offsets the frequency of the output signal from the latter by a frequency offset, wherein the output signal from this frequency offset unit (40c) can be supplied to the first and/or second addition unit (11a, 11b).

5. Signal generator according to claim 2
**characterised in that**
separate high frequency units (22a, 22b) are connected in series to each of the I/Q-modulators (20a, 20b), and that the output signals from the high frequency units (22a, 22b) can be combined in a combination unit (42).

6. Signal generator according to any one of claims 1 to 5,
**characterised in that**
a fading unit (13a, 13b), which applies fading and/or distortion to the base band signal, is connected in series to each base band unit (2a, 2b), and that at least one further addition unit (14a, 14b) is connected in series to the fading units (13a, 13b), by means of which the output signals from the fading units (13a, 13b) can be added.

7. Signal generator according to any one of claims 1 to 6,
**characterised in that**
a noise unit (15a, 15b), which applies noise to the base band signal, is connected in series to each base band unit (2a, 2b), and that at least one further addition unit (19a, 19b) is connected in series to the noise units (15a, 15b), by means of which the output signals from the noise units (15a, 15b) can be added.

## Revendications

1. Générateur de signal (1) avec
au moins une première unité de bande de base (2a) et une seconde unité de bande de base (2b) qui génèrent un signal de bande de base numérique,
au moins une première unité de décalage de fréquence (40a) qui est raccordée à la première unité de bande de base (2a) et qui décale la fréquence du signal de sortie de cette unité de bande de base (2a) d'un décalage de fréquence,
au moins une première unité d'addition (11a) qui additionne le signal de sortie de la seconde unité de bande de base (2b) et le signal de sortie de la première unité de décalage de fréquence (40a), et
un premier modulateur I/Q (20a) intercalé à la suite de la première unité d'addition (11a).

2. Générateur de signal selon la revendication 1,
**caractérisé par**
une deuxième unité de décalage de fréquence (40a) qui est raccordée à la seconde unité de bande de base (2b) et qui décale la fréquence du signal de sortie de la seconde unité de bande de base (2a) d'un décalage de fréquence,
une deuxième unité d'addition (11b) qui additionne le signal de sortie de la première unité de bande de base (2a) et le signal de sortie de la deuxième unité de décalage de fréquence (40b), et
un modulateur I/Q (20b) intercalé à la suite de la deuxième unité d'addition (11b).

3. Générateur de signal selon la revendication 1 ou 2,
**caractérisé en ce que**
les unités de bande de base (2a, 2b) sont commandées de manière synchrone par une unité de commande commune (28).

4. Générateur de signal selon l'une quelconque des revendications 1 à 3,
**caractérisé par**
un générateur de bande de base (6) auquel peut être amené un signal externe analogue ou numérique et qui, à partir de ce signal, génère un signal de bande de base numérique, et
une autre unité de décalage de fréquence (40c) qui est raccordée au générateur de bande de base (6) et qui décale la fréquence du signal de sortie de celui-ci d'un décalage de fréquence, le signal de sortie de cette unité de décalage de fréquence (40c) pouvant être amené à la première et/ou à la deuxième unité d'addition (11a, 11b).

5. Générateur de signal selon la revendication 2,
**caractérisé en ce que**
des unités à haute fréquence séparées (22a, 22b) sont intercalées à la suite des modulateurs I/Q (20a, 20b) et **en ce que** les signaux de sortie des unités à haute fréquence séparées (22a, 22b) peuvent être combinés dans une unité de combinaison (42).

6. Générateur de signal selon l'une quelconque des revendications 1 à 5,
**caractérisé en ce que**
une unité de fading (13a, 13b), qui alimente le signal de bande de base avec un fading et/ou une distorsion, est intercalée à la suite de chaque unité de bande de base (2a, 2b) et **en ce qu'**au moins une autre unité d'addition (14a; 14b), avec laquelle les signaux de sortie des unités de fading (13a, 13b) peuvent être additionnés, est intercalée à la suite des unités de fading (13a, 13b).

7. Générateur de signal selon l'une quelconque des revendications 1 à 5,
**caractérisé en ce que**
une unité de bruit (15a, 15b), qui alimente le signal de base avec du bruit, est intercalée à la suite de chaque unité de bande de base (2a, 2b) et **en ce qu'**une autre unité d'addition (19a; 19b), avec laquelle les signaux de sortie des unités de bruit (15a, 15b) peuvent être additionnés, est intercalée à la suite des unités de bruit (15a, 15b).
